Europäisches Patentamt

European Patent Office

Office européen des brevets

(19)

(11) Veröffentlichungsnummer: **0 051 874**
**B1**

(12) # EUROPÄISCHE PATENTSCHRIFT

(45) Veröffentlichungstag der Patentschrift:
**27.12.84**

(21) Anmeldenummer: **81109597.5**

(22) Anmeldetag: **10.11.81**

(51) Int. Cl.³: **F 17 D 5/06,** F 16 K 21/16,
G 01 F 13/00

(54) **Automatische Absperranlage für Wasserversorgungsleitungen in Gebäuden.**

(30) Priorität: **12.11.80 DE 3042544**

(43) Veröffentlichungstag der Anmeldung:
**19.05.82 Patentblatt 82/20**

(45) Bekanntmachung des Hinweises auf die Patenterteilung:
**27.12.84 Patentblatt 84/52**

(84) Benannte Vertragsstaaten:
**AT BE CH DE FR GB LI LU NL SE**

(56) Entgegenhaltungen:
**DE - A - 2 805 908
FR - A - 2 468 069
US - A - 3 896 280
US - A - 4 180 088**

(73) Patentinhaber: **Firma Josef Dicke, Bamenohler Strasse,
D-5950 Finnentrop 1 (DE)**

(72) Erfinder: **Dicke, Werner, Am Sportplatz 9,
D-5950 Finnentrop 11, Heggen (DE)**

(74) Vertreter: **Fritz, Herbert, Dipl.-Ing., Mühlenberg 74,
D-5760 Arnsberg 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine automatische Absperranlage für Wasserversorgungsleitungen in Gebäuden mit den nachfolgenden Merkmalen:

Sie weist eine Fühl- und Impulsarmatur auf zur Ermittlung eines Wasserstroms in der Leitung und ein damit in Baueinheit verbundenes elektromagnetisches Absperrventil mit Anschlussstutzen in gerader Anordnung. Die Fühl- und Impulsarmatur sowie das Absperrventil sind an ein einstellbares Zeitrelais angeschlossen. Ein Rohrstutzen der Fühl- und Impulsarmatur nimmt einen magnetischen Schwebekörper auf, der durch Kräfteeinfluss an einer Zuflussöffnung gehalten wird und durch den Druck des strömenden Wassers angehoben wird, wobei er in der abgehobenen Stellung einen aussen am Rohrstutzen angebrachten Magnetschalter für das Zeitrelais betätigt.

Absperranlagen dieser Art werden in die Wasserversorgungsleitung eines Gebäudes hinter der Wasseruhr eingebaut und haben die Aufgabe, eine automatische Absperrung des Wassers bei Wasserschäden und bei unkontrollierter Wasserentnahme herbeizuführen. Die automatische Abschaltung erfolgt nach Ablauf einer am Relais eingestellten Zeitspanne, die über der Zeitdauer eines Normalverbrauches liegt. Das Zeitrelais wird durch das Fühl- und Impulsorgan jedesmal in Gang gesetzt, wenn Wasser zu fliessen beginnt. Wird der Wasserstrom wieder unterbrochen, dann geht das Zeitrelais auf Null zurück.

Bei einer bekannten Absperranlage dieser Art (FR-A-2.468.069 sind Fühl- und Impulsarmaturen einerseits und Absperrventile anderseits jeweils in Schenkeln eines U-förmigen Rohrkrümmers untergebracht. Der magnetische Schwebekörper besteht aus einer Kugel, die auf einem Sitz ruht, wenn kein Wasser fliesst, und die bei Wasserfluss bis zum Anschlag an ein quer liegendes Gitter angehoben werden soll, wobei in dieser Lage der aussen angebrachte Magnetschalter durch die magnetische Kugel eingeschaltet werden soll. Bei fehlendem Wasserfluss geht die Kugel durch ihr Gewicht oder durch eine Feder auf ihren Sitz zurück. Entsprechend der Form des U-Bogens treten beim Durchfliessen Druckverluste des Wassers auf. Im übrigen ist bei dieser bekannten Anlage auch ein entsprechender Platzbedarf zu berücksichtigen.

Nach der Erfindung soll eine automatische Absperranlage der eingangs beschriebenen Art so ausgebildet werden, dass ein geringerer Druckverlust eintritt und auch der Platzbedarf geringer ist als es bei dem vorbeschriebenen Stand der Technik der Fall ist.

Diese Aufgabe wird durch die Merkmale von Anspruch 1 gelöst.

Dabei weist die Fühl- und Impulsarmatur einen magnetischen Zylinder auf, der durch magnetische Kräfte gegen einen Anschlag im Bereich der Zuflussöffnung in seiner Sitzstellung gehalten wird. Das Eigengewicht des Schwebekörpers spielt dabei keine Rolle, so dass die Anlage in eine horizontale, geneigte oder lotrechte Wasserleitung eingebaut werden kann. In der abgehobenen Stellung des Schwebekörpers gelangt das Wasser über Durchströmöffnungen der Hülsen in den Ringraum zwischen Hülse und Rohrstutzen und findet dort die Möglichkeit zum Weiterfliessen in gerader Richtung, wobei nur geringe Druckverluste auftreten. Die Armatur nach der Erfindung ist sehr feinfühlig, spricht also bei relativ geringen Wassermengen an, weil die Magnetkräfte aufgrund des Abstandes vom Gegenmagneten in der Phase des Abhebens noch relativ gering sind. Sobald das der Strömungsrichtung zugewandte Ende des magnetischen Schwebekörpers die Durchströmöffnungen in der Hülse erreicht hat, hat auch bereits der Magnetkreis des Schwebekörpers den Magnetschalter erreicht, so dass dieser in Tätigkeit gebracht wird. Indessen kann sich der Schwebekörper bei grösseren Wassermengen noch weitergehend auf den Gegenmagneten zu bewegen, wobei die Durchströmöffnungen maximal vollständig geöffnet werden, so dass auch grösste Wassermengen zum Durchfluss gebracht werden können.

Gemäss einer weiteren Ausbildung der Erfindung ist zwischen dem zylindrischen Schwebekörper und der Zuflussöffnung ein Toleranzbereich gelassen, der den Durchfluss von geringen unbedeutenden Wassermengen ohne Abheben des Schwebekörpers ermöglicht.

Im folgenden wird ein Ausführungsbeispiel der Erfindung beschrieben unter Bezugnahme auf die beiliegenden Zeichnungen.

Fig. 1 zeigt eine Absperranlage nach der Erfindung im Prinzip

Fig. 2 ist eine Seitenansicht eines Fühl- und Impulsorganes in Verbindung mit einem magnetischen Absperrventil

Fig. 3 zeigt eine Seitenansicht einer dazugehörigen Aufputz-Steckdose

Fig. 4 stellt einen Längsschnitt durch das Fühl- und Impulsorgan dar bei fehlendem Wasserdurchfluss

Fig. 5 zeigt den entsprechenden Schnitt bei minimalem Durchfluss

Fig. 6 veranschaulicht die Stellung der Funktionselemente bei maximalem Wasserdurchfluss.

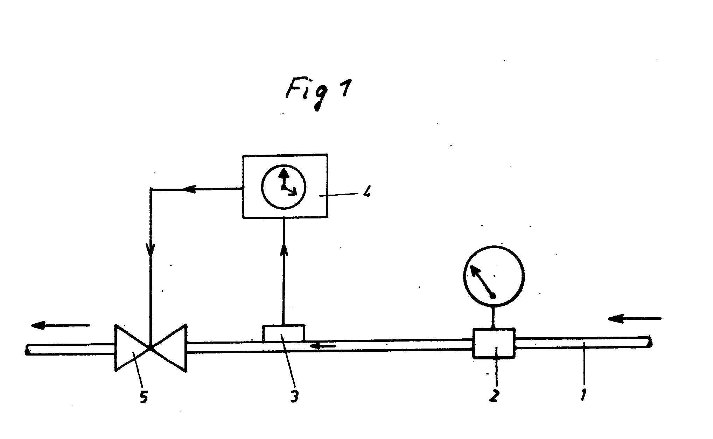

Zunächst wird auf Fig. 1 Bezug genommen:

In einem Verteilerstrang 1 einer Wasserversorgungsleitung eines Gebäudes ist gleich hinter einem Wassermengenzähler 2 (Wasseruhr) ein Fühl- und Impulsorgan 3 eingebaut. Dahinter ist in dieser Leitung ein magnetisch betätigtes Absperrventil 5 eingebaut. Dieses Absperrventil wird durch ein einstellbares Zeitrelais 4 gesteuert, an dem eine beliebige Zeitdauer, beispielsweise ein Zeitraum von einer Stunde, einstellbar ist. Dieses Zeitrelais 4 wird durch das Fühl- und Impulsorgan 3 eingeschaltet bzw. ausgeschaltet.

Die Anlage funktioniert wie folgt:

Sie wird an einem Ein-Ausschalter am Zeitrelais 4 eingeschaltet. Das Fühl- und Impulsorgan 3 spricht an, wenn in der Leitung 1 Wasser zu fliessen beginnt und schaltet das Zeitrelais 4 ein, wobei das Uhrwerk desselben zu laufen beginnt. Sobald der Wasserstrom in der Leitung 1 wieder aussetzt, spricht das Fühlorgan 3 wieder an und stellt das Uhrwerk des Zeitrelais wieder auf Null. Dieser Vorgang spielt sich jedesmal ab, wenn eine Wassermenge in der Leitung 1 fliesst, sei dieser auch noch so gering. Das Ansprechen des Fühl- und Impulsorganes 3 bleibt ohne Einfluss auf das Absperrventil 5, solange die jeweilige Zeitspanne, über welche das Uhrwerk des Relais 4 läuft, geringer ist, als ein am Zeitrelais eingestellter zeitlicher Grenzwert, beispielsweise von 20 Minuten. Fliesst in der Leitung 1 Wasser über diese Zeitspanne des Grenzwertes, also über 20 Minuten ununterbrochen, erreicht also das Uhrwerk im Zeitrelais 4 den Grenzwert, dann schaltet das Relais das Absperrventil 5, und die Leitung 1 wird gesperrt gehalten, solange das Relais 4 unter Strom steht. Durch Ausschalten des Relais 4 von Hand an einem Ausschalter wird dieses stromlos und das Absperrventil öffnet sich. Durch Einschalten des Relais wird dieses erneut unter Strom gesetzt, auf Null eingestellt, so dass die gesamte Anlage wieder in Funktion ist.

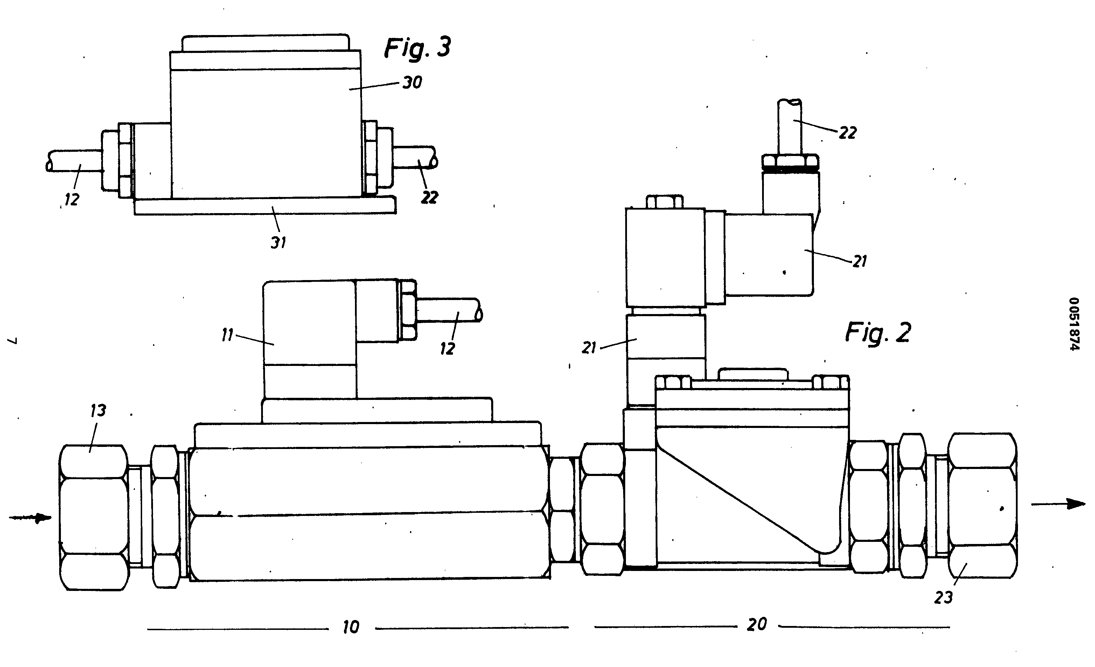

Fig. 2 und 3 zeigen die Armaturen der Anlagen in einer praktischen Ausführungsform.

Danach ist eine Fühl- und Impulsarmatur 10 in Gestalt eines geraden Rohrstutzens in gerader Anordnung fest mit einem magnetischen Absperrventil 20 verbunden. Endseitig sind jeweils Rohrkupplungen 13 bzw. 23 (Querverschraubungen) vorgesehen, um in einfacher Weise den Anschluss an den Wasserrohrstrang zu ermöglichen.

Fig. 3 zeigt eine Aufputz-Steckdose 30, geeignet zur Aufnahme eines Steckers, der eine elektrische Verbindung mit dem Zeitrelais herstellt.

Über eine elektrische Leitung 12 ist diese Steckdose 30 mit Anschlusselementen 11 der Fühl- und Impulsarmatur 10 verbunden. Eine weitere elektrische Leitung 22 führt von der Aufputz-Steckdose 30 zu den elektrischen Anschlusselementen 21 am magnetischen Absperrventil 20. Für eine Montage auf Putz in unmittelbarer Nähe der Wasserleitung ist an der Steckdose 30 eine Wandplatte 31 vorgesehen.

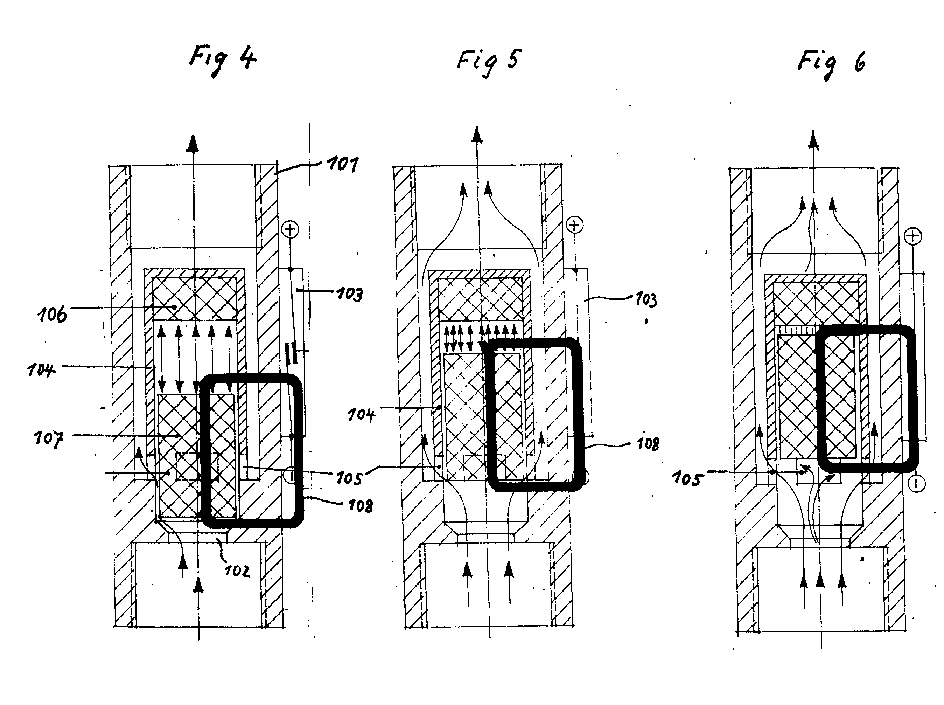

Die Fühl- und Impulsarmatur nach Fig. 4 bis 6 hat die Form eines geraden Rohrstutzens 101 mit einer verringerten Durchflussöffnung 102. Diese Öffnung wird in Richtung des Pfeiles vom Wasser durchströmt. Die Öffnung ist nach hinten durch eine eingebaute Hülse 104 fortgesetzt. Am Boden der Hülse ist ein Gegenmagnet 106 eingebaut. Hülse und Öffnung 102 nehmen in Achsrichtung verschiebbar einen zylindrischen magnetischen Schwebekörper 107 auf. Durch seinen eigenen Magnetismus und durch den Magnetismus des Magneten 106 wird dieser Schwebekörper entgegen der Durchflussrichtung des Wassers gegen einen Anschlag im Bereich der Öffnung 102 gedrückt. Der vom Schwebekörper 107 aufgebaute magnetische Kreis ist mit 108 bezeichnet.

Fig. 4 zeigt die Stellung des Schwebekörpers, wenn kein Wasser fliesst oder eine bedeutungslose Wassermenge. Der Schwebekörper wird durch die magnetischen Kräfte in den Bereich der Öffnung 102 bis zum einen Anschlag gedrückt.

Seitlich am Rohrstutzen befindet sich ein Magnetschalter 103. In der Stellung nach Fig. 1 erreicht der Magnetkreis 108 noch nicht den Magnetschalter 103, so dass dessen Kontaktzungen offen bleiben. Der angeschlossene elektrische Kreis ist somit offen.

Bedeutungslose Wassermengen vermögen durchzufliessen durch den Toleranzbereich zwischen Schwebekörper 107 und Öffnung 102.

Fig. 5 zeigt das Organ bei einem minimalen Wasserdurchfluss von Bedeutung, beispielsweise bei einer Wassermenge von 0,5 l/min.

Durch den Wasserstrom ist dabei der Schwebekörper entgegen dem magnetischen Druck ein Stück abgehoben. Seine vordere Kante steht dabei etwa im Bereich des Beginns der Hülse 104. Diese ist dort mit mehreren Durchströmöffnungen 105 in der Hülsenwand versehen. Diese nehmen das durchfliessende Wasser auf, das durch den Ringspalt zwischen Schwebekörper und Öffnung 102 gelangt ist. Das Wasser kann weiter durch den Ringraum zwischen Hülse und Rohrstutzen fliessen.

In der Stellung nach Fig. 5 ist der Magnetkreis 108 in den Bereich des Magnetschalters 103 gelangt und hat einen Einschaltvorgang ausgelöst. Der elektrische Stromkreis ist geschlossen.

Bei Stellung nach Fig. 6 ist der Schwebekörper durch verstärkten Wasserdurchfluss so weit nach vorne gegen den Magneten 106 gedrückt worden, dass die Öffnungen 105 in der Hülse vollständig freigegeben sind, so dass Wasser in maximaler Menge durchfliessen kann. Der Magnetkreis 108 beeinflusst immer noch den Magnetschalter 103, so dass der Stromkreis geschlossen bleibt.

**Patentansprüche**

1. Automatische Absperranlage für Wasserversorgungsleitungen in Gebäuden mit folgenden Merkmalen:
- sie hat eine Fühl- und Impulsarmatur (10) zum Ermitteln des Wasserflusses und ein in Baueinheit damit verbundenes elektromagnetisches Absperrventil (20) sowie Anschlussstutzen (13, 23) zum Anschliessen an die Wasserleitung;
- ein einstellbares Zeitrelais (4) ist elektrisch mit der Fühl- und Impulsarmatur (10) und mit dem Absperrventil (20) verbunden;
- ein Rohrstutzen (101) der Fühl- und Impulsarmatur nimmt einen magnetischen Schwebekörper (107) auf, der durch Kräfteeinfluss an einer Zuflussöffnung (102) gehalten und durch den Druck des durchfliessenden Wassers abgehoben wird, wobei er in der abgehobenen Stellung einen aussen am Rohrstutzen (101) angebrachten Magnetschalter (103) betätigt; gekennzeichnet durch folgende Merkmale:
- der Rohrstutzen (101) der Fühl- und Impulsarmatur (10) ist geradlinig ausgeführt und mit dem Absperrventil (20) in geradliniger Anordnung verbunden;
- im Rohrstutzen (101) ist konzentrisch und mit Abstand von der Stutzenwand im Anschluss an die Zuflussöffnung (102) eine Hülse (104) fest eingebaut, die den zylindrisch ausgeführten magnetischen Schwebekörper (107) verschiebbar aufnimmt;
– bei dem der Zuflussöffnung (102) abgewandten Ende der Hülse ist fest ein Gegenmagnet (106) eingebaut;
– in der Hülsenwand sind Durchströmöffnungen (105) vorgesehen, die vom abgehobenen Schwebekörper zumindest teilweise freigegeben werden, wobei der Magnetkreis (108) des Schwebekörpers den Magnetschalter (103) betätigt.

2. Automatische Absperranlage nach Anspruch 1, dadurch gekennzeichnet, dass zwischen Schwebekörper (107) und Zuflussöffnung (102) ein Toleranzbereich für den Durchfluss bedeutungsloser Wassermengen bleibt.

### Claims

1. Automatic controlling apparatus for a domestic water supply system having the following features:
– it has a detecting and impulse fitting (10) for determining water flow, and a shutoff valve (20) of electromagnetic type which is connected with said fitting to constitute an integral unit, also unions (13, 23) for connection to the water conduit;
– an adjustable timing relay (4) is connected electrically to the detecting and impulse fitting (10) and to the shutoff valve (20);
– a stub pipe (101) of the detecting and impulse fitting accommodates a magnetic floating element (107) which is held by influence of forces on an inlet aperture (102) and is lifted off by the pressure of the throughflowing water, and in the lifted-off position it actuates a magnetic switch (103) arranged externally on the stub pipe (101; characterised by the following features:
– the stub pipe (101) of the detecting and impulse fitting (10) is of rectilinear construction and is connected to the shutoff valve (20) in a rectilinear arrangement;
– there is fixedly arranged in the stub pipe (101) concentrically and with spacing from the pipe wall, adjoining the inlet aperture (102), a sleeve (104) wherein the cylindrically constructed magnetic floating element (107) is displaceably accommodated;
– a counter-magnet (106) is fixedly arranged at that end of the sleeve which is remote from the inlet aperture (102);
– provided in the sleeve wall are throughflow apertures (105) which are at least partly unmasked by the lifted-off floating element, and the magnetic circuit (108) of the floating element actuates the magnetic switch (103).

2. Automatic controlling apparatus according to claim 1, characterised in that a tolerance range for the throughflow of insignificant quantities of water remains between the floating element (107) and the inlet aperture (102).

### Revendications

1. Appareil de contrôle automatique pour une installation domestique d'alimentation en eau qui comporte:
– un dispositif de contrôle et de commande (10) pour la détermination du débit d'eau, une vanne d'arrêt (20) électromagnétique constituant une unité de construction avec ledit dispositif (10) et des raccords (13, 23), pour le raccordement à la conduite d'eau;
– un relais temporisateur (4) réglabe, raccordé électriquement au dispositif de contrôle et de commande (10) et à la vanne d'arrêt (20);
– un flotteur magnétique (107) qui est logé dans un manchon (101) du dispositif de contrôle et de commande (10), maintenu près d'une ouverture d'alimentation (102) sous l'influence de forces, dégagé sous la pression du débit d'eau et actionnant en position dégagée un interrupteur magnétique disposé extérieurement sur ledit manchon (101), caractérisée en ce que:
– le manchon (101) du dispositif de contrôle et de commande (10) a une forme droite et est relié à la vanne d'arrêt (20) en ligne droite;
– une douille (104), dans laquelle est logé tout en étant déplaçable le flotteur magnétique de forme cylindrique, est disposé dans le manchon (101) de manière fixe et concentrique audit manchon à une certaine distance de la paroi dudit manchon,
– à l'extrémité de la douille, opposée à l'ouverture d'alimentation (102), est disposée de manière fixe un contreaimant (106);
– dans la paroi de la douille sont prévus des orifices (105) pour le passage de l'eau, qui sont libérés au moins partiellement lorsque le flotteur magnétique est dégagé, le circuit magnétique (108) du flotteur actionnant l'interrupteur magnétique (103);

2. Appareil de contrôle automatique selon la revendication 1, caractérisée par une zone de tolérance pour le passage de quantités d'eau insignifiantes, située entre le flotteur (107) et l'ouverture d'alimentation (102).

Fig 1

Fig. 2

Fig. 3

Fig 4

Fig 5

Fig 6

101

103

106

104

107

105

108

102

103

104

105

108

105

0051874

9